# EUROPÄISCHE PATENTANMELDUNG

(11) **EP 2 267 845 A2**
(43) Veröffentlichungstag der Anmeldung: **29.12.2010**
(21) Anmeldenummer: 10160980.8
(22) Anmeldetag: 26.04.2010
(51) Int. Cl.: H01R 4/28

(54) **Elektrische Verbindungsanordnung**

(30) Priorität: 25.06.2009 DE 102009027190
(71) Anmelder: Robert Bosch GmbH, 70442 Stuttgart (DE)
(72) Erfinder: Scheurich, Stephan, 76199, Karlsruhe (DE); Lauk, Detlef, 77871, Renchen (DE)

(57) **Zusammenfassung**

Die Erfindung betrifft eine elektrische Verbindungsanordnung mit einem Steckeranschlusselement (16; 16a), das ein Steckergehäuse (31) sowie im Steckergehäuse (31) angeordnete Steckeranschlussfahnen (28, 29) aufweist, wobei die Steckeranschlussfahnen (28, 29) zur elektrischen Kontaktierung einer Bürsteneinrichtung (25) eines Antriebsmotors (11) dienen. Erfindungsgemäß ist es vorgesehen, dass die Bürsteneinrichtung (25) elektrische Anschlusselemente (26, 27) für die Steckeranschlussfahnen (28, 29) aufweist, dass die Bürsteneinrichtung (25) mit ihren Steckeranschlussfahnen (28, 29) in ein Gehäuse (15) hineinragt, das wenigstens eine Öffnung (22) zumindest im Bereich der Steckeranschlussfahnen (28, 29) aufweist, dass das Gehäuse (15) ein mit dem Motorengehäuse (14) gekoppeltes und von diesem unterschiedliches separates Gehäuse (15) ist, durch die die Steckeranschlussfahnen (28, 29) in Kontakt mit den Anschlusselementen (26, 27) gebracht werden und, dass die Verbindung zwischen den Steckeranschlussfahnen (28, 29) und den Anschlusselementen (26, 27) als kraft-, form-, klemm- oder reibschlüssige Verbindung ausgebildet ist.

## Beschreibung

### Stand der Technik

Die Erfindung betrifft eine elektrische Verbindungsanordnung nach dem Oberbegriff des Anspruchs 1.

Eine derartige Verbindungsanordnung ist insbesondere als Bestandteil eines Fensterheberantriebs in einem Kraftfahrzeug bekannt. Hierbei werden in der Praxis aufgrund der unterschiedlichen Anforderungen der Kraftfahrzeughersteller drei verschiedene Anordnungen realisiert. Bei der ersten bekannten Anordnung wird das Steckeranschlusselement an ein Getriebegehäuse angekoppelt, welches wiederum mit einem Elektromotor verbunden ist. Bei der zweiten bekannten Anordnung ist das Steckeranschlusselement mit dem Motorgehäuse eines Elektromotors verbunden, wobei das Steckeranschlusselement in eine Bürstenhaltereinrichtung integriert ist, und wobei die Bürsteneinrichtung auf der dem Getriebegehäuse abgewandten Seite angeordnet ist. Zuletzt ist es bei einer dritten Anordnung bekannt, das Steckeranschlusselement am Getriebedeckel anzuordnen, welcher Bestandteil des Getriebegehäuses ist. All diese verschiedenen Anordnungen erfordern beim Hersteller des Fensterheberantriebs eine große Anzahl von verschiedenen Varianten von Elektromotoren, Steckeranschlusselementen und Getriebegehäusen, wodurch insgesamt die Entwicklungs- und Fertigungskosten relativ hoch sind.

### Offenbarung der Erfindung

Ausgehend von dem dargestellten Stand der Technik liegt der Erfindung die Aufgabe zugrunde, eine elektrische Verbindungsanordnung nach dem Oberbegriff des Anspruchs 1 derart weiterzubilden, dass verschiedenste Anforderungen hinsichtlich der Anordnung des Steckeranschlusselements mit Blick auf seine Kontaktierung mit einem Gegenstecker mittels einer reduzierten Anzahl von verschiedenen Steckeranschlusselementen erfüllt werden können. Diese Aufgabe wird bei einer elektrischen Verbindungsanordnung mit den Merkmalen des Anspruchs 1 gelöst. Der Erfindung liegt dabei die Idee zugrunde, ein Steckeranschlusselement vorzusehen, welches in verschiedenen Positionen mit einem Gehäuse verbunden werden kann, um somit unterschiedliche Steckerpositionen für eine Kontaktierung mit einem Gegenstecker, insbesondere einem Gegenstecker eines Kraftfahrzeugs realisieren zu können.

Vorteilhafte Weiterbildungen der erfindungsgemäßen elektrischen Verbindungsanordnung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Besonders bevorzugt ist es hierbei, dass die wenigstens eine Öffnung an einem Getriebegehäuse ausgebildet ist, das mit dem Antriebsmotor verbunden ist. Dadurch kann der insbesondere als Elektromotor ausgebildete Antriebsmotor als standardisiertes Bauteil hergestellt sein, während das Getriebegehäuse, welches üblicherweise als Metallgussteil oder als aus Kunststoff bestehendes Spritzgussteil ausgebildet ist, auf einfache und preiswerte Art mit der wenigstens einen Öffnung versehen werden kann.

Um eine sichere Verbindung zwischen den Steckeranschlussfahnen und den Anschlusselementen zu ermöglichen, ist es in einer vorteilhaften Weiterbildung vorgesehen, dass die Anschlusselemente zumindest im Bereich der Kontaktierung mit den Steckeranschlussfahnen im Querschnitt rechteckförmig ausgebildet sind, wobei die Längsseite der Anschlusselemente parallel zur Fügerichtung der Steckeranschlussfahnen verläuft und, dass die Steckeranschlussfahnen eine Öffnung zur klemmenden Aufnahme der Anschlusselemente aufweisen. Dadurch wird eine hohe Steifigkeit der Steckeranschlussfahnen in Fügerichtung ermöglicht, sodass ein Ausweichen der Steckeranschlussfahnen quer zur Fügerichtung vermieden werden kann. Weiterhin lässt sich dadurch auf einfache Art und Weise eine (Schneid-) Klemmverbindung zwischen den Anschlusselementen und den Steckeranschlussfahnen verwirklichen.

Um die Kundenforderungen nach unterschiedlichen Anschlussrichtungen für einen Gegenstecker und somit unterschiedliche Positionen der Steckeranschlusspins im Steckeranschlusselement erfüllen zu können, ohne dass dazu ein anderes Steckeranschlusselement verwendet werden muss, ist es bevorzugt vorgesehen, dass die Steckeranschlussfahnen mit Anschlusspins für einen Gegenstecker verbunden sind, wobei die Anschlusspins rechtwinklig zu den Steckeranschlussfahnen angeordnet sind. Durch diese Ausbildung lassen sich zwei, um 180° zueinander versetzt angeordnete, Positionen von Anschlusspins mit ein und demselben Steckeranschlusselement verwirklichen.

Besonders wirtschaftlich und in großen Stückzahlen lassen sich die Steckeranschlussfahnen herstellen, wenn diese als Stanzbiegeteil aus einem flachen Materialzuschnitt ausgebildet sind.

Da manche Fahrzeughersteller zusätzliche Sensoren wünschen, ist es in einer vorteilhaften Weiterbildung vorgesehen, dass das Steckeranschlusselement zumindest Teile einer Sensoranordnung trägt, die zwischen den Steckeranschlussfahnen angeordnet sind. Durch diese Ausbildung lassen sich die weiteren bzw. anderen Bauteile, die mit der elektrischen Verbindungsanordnung gekoppelt sind, unverändert weiterverwenden, sodass je nach Kundenwunsch eine Sensorik kosten- und platzgünstig in ein Steckeranschlusselement integriert werden kann.

Um eine sichere Verbindung zwischen dem Steckeranschlusselement und dem Gehäuse ohne zusätzliche Handhabungsschritte wie Verschraubungen oder Verklebungen zu ermöglichen, ist es in einer weiteren vorteilhaften Ausgestaltung der Erfindung vorgesehen, dass die Verbindung zwischen dem Steckeranschlusselement und dem Gehäuse durch eine Rastverbindung erfolgt.

Hierbei ist es besonders bevorzugt, dass die Bürsteneinrichtung die Rastverbindung für das Steckeranschlusselement aufweist. Dadurch wird die Bürsteneinrichtung mit dem Steckeranschlusselement verbunden, sodass beispielsweise Toleranzen zwischen der Bürsteneinrichtung und dem Getriebegehäuse eine untergeordnete Rolle spielen.

Um einerseits eine preiswerte Herstellbarkeit des Steckeranschlusselements zu ermöglichen, und andererseits eine einfache Integration von Sensorelementen zu ermöglichen, ist es bevorzugt vorgesehen, dass die Steckeranschlussfahnen an einem Querträger des Steckeranschlusselements angeordnet sind, wobei die Steckeranschlussfahnen beabstandet zu einer Längsebene des Steckeranschlusselements angeordnet sind und, dass das Steckeranschlusselement als ein aus Kunststoff bestehendes Spritzgussteil ausgebildet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 und 2: Seitenansichten auf eine Getriebeantriebseinheit als Bestandteil eines Fensterheberantriebs in einem Kraftfahrzeug mit einer erfindungsgemä- ßen Verbindungsanordnung, bei der das Steckeranschlusselement ober- bzw. unterhalb eines Getriebegehäuses angeordnet ist,
- Fig. 3 und 4: eine Seitenansicht sowie eine Stirnansicht auf eine Getriebeantriebsein- heit, bei der ein gegenüber den Fig. 1 und 2 abgewandeltes Steckeran- schlusselement verwendet wird,
- Fig. 5: eine Draufsicht auf eine Getriebeantriebseinheit zur Darstellung einer einheitlichen Schnittstelle für die in den Fig. 1 bis 4 verwendeten Ste- ckeranschlusselemente,
- Fig. 6 und 7: Seitenansichten eines in der Getriebeantriebseinheit gemäß den Fig. 1 und 2 verwendeten Steckeranschlusselements mit einem Hall-Sensor,
- Fig. 8: eine perspektivische Ansicht auf einen Bürstenträger für einen Elektro- motor, wie er bei einer Getriebeantriebseinheit nach den Fig. 1 bis 5 verwendet wird und
- Fig. 9: den Bürstenträger gemäß der Fig. 8 im Zusammenhang mit einem Ste- ckeranschlusselement in perspektivischer Darstellung zur Verdeutli- chung der Montage bzw. Demontage des Steckeranschlusselements.

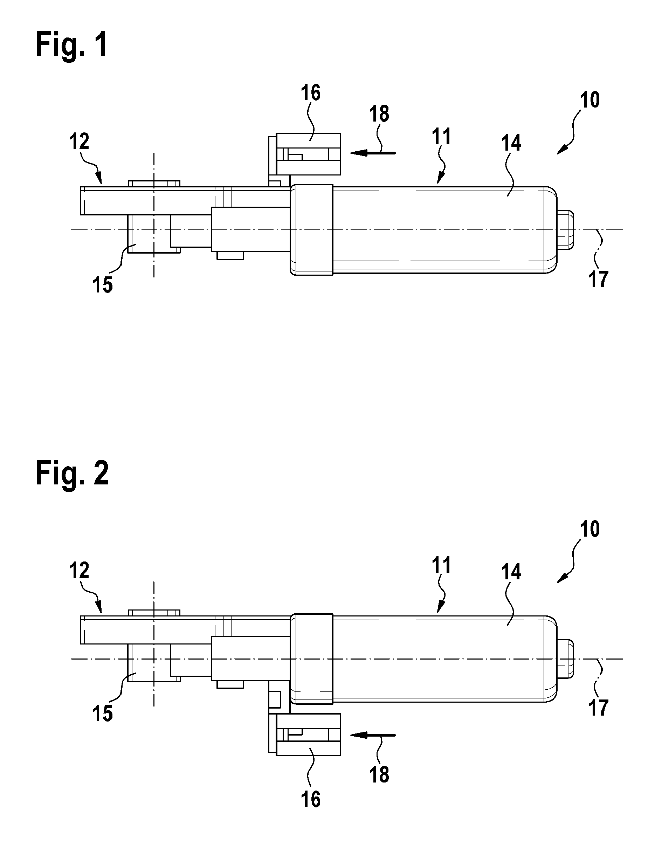

In der Fig. 1 ist eine Getriebeantriebseinheit 10 dargestellt, wie sie als Fensterheberantrieb in einem Kraftfahrzeug Verwendung findet. Die Getriebeantriebseinheit 10 umfasst einen Elektromotor 11 sowie eine mit dem Elektromotor 11 verbundene Getriebeeinheit 12. Mittels der Getriebeeinheit 12 wird die Drehzahl des Elektromotors 11 an einem Abtriebsritzel des Elektromotors 11 reduziert und an ein nicht dargestelltes Abtriebselement der Getriebeeinheit 12 weitergeleitet, welches mit dem Fenster des Kraftfahrzeugs verbunden ist, um dieses heben bzw. absenken zu können.

Der Elektromotor 11 weist ein als Gehäuse dienendes Polrohr 14 auf, welches mit einem insbesondere aus Kunststoff bestehenden Getriebegehäuse 15 formschlüssig verbunden ist. Zur Ansteuerung der Getriebeantriebseinheit 10 über einen Kabelbaum des Kraftfahrzeugs dient ein Steckeranschlusselement 16, welches mit einem entsprechenden (nicht dargestellten) Gegenstecker des Kabelbaums verbunden ist.

Bei der Getriebeantriebseinheit 10 mit ihrem Elektromotor 11 und der Getriebeeinheit 12 handelt es sich um weitgehend standardisierte Bauteile, die für verschiedene Fahrzeughersteller und Fahrzeugtypen in ähnlicher Weise verwendet werden können. Aufgrund der unterschiedlichen Einbauverhältnisse der Getriebeantriebseinheiten 10 im jeweiligen Kraftfahrzeug ergeben sich jedoch unterschiedliche Anforderungen hinsichtlich der Positionierung des jeweiligen Steckeranschlusselements 16 mit Blick auf die Richtung, mit der der Gegenstecker des Kabelbaums mit dem Steckeranschlusselement 16 kontaktiert werden soll.

So ist in der Fig. 1 der Fall dargestellt, bei dem das Steckeranschlusselement 16 im Wesentlichen oberhalb der Längsachse 17 des Elektromotors 11 und des Getriebegehäuses 15 angeordnet ist, wobei der (nicht dargestellte) Gegenstecker in Richtung und in Höhe des Pfeils 18 mit dem Steckeranschlusselement 16 verbunden wird.

Bei dem in der Fig. 2 dargestellten Ausführungsbeispiel der Erfindung lässt sich dasselbe Steckeranschlusselement 16 in einer Ebene unterhalb der Längsachse 17 des Elektromotors 11 und des Getriebegehäuses 15 anordnen. Weiterhin wird erwähnt, dass sowohl bei dem Ausführungsbeispiel gemäß der Fig. 1, als auch bei dem Ausführungsbeispiel gemäß der Fig. 2 durch ein Drehen des jeweiligen Steckeranschlusselements 16 um jeweils 180° die Anschlussrichtung des Gegensteckers entgegen des Pfeils 18 bzw. von der Seite der Getriebeeinheit 12 her erfolgen kann.

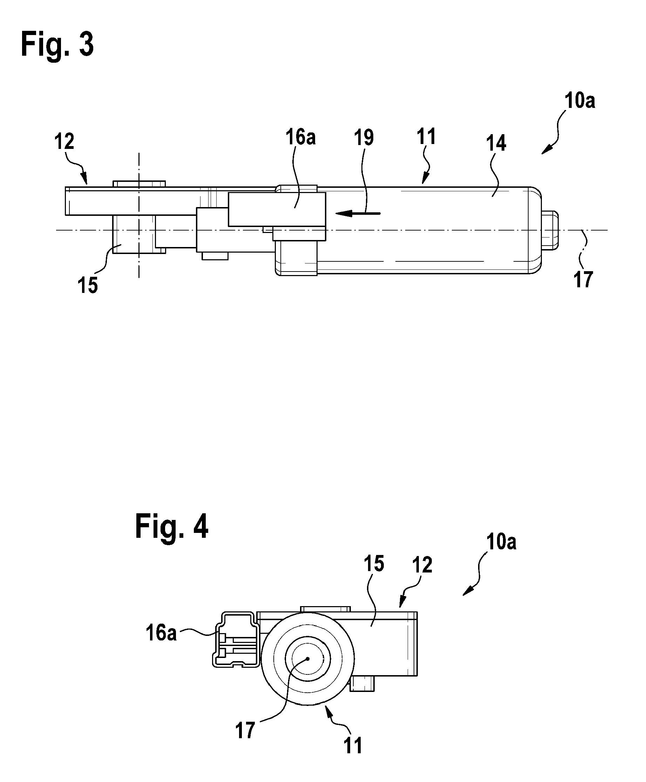

Es gibt jedoch auch Kraftfahrzeughersteller, die einen Anschluss der Getriebeantriebseinheit 10 seitlich zum Elektromotor 11 bzw. zum Getriebegehäuse 15 in Höhe der Längsachse 17 fordern. Dieser Fall ist bei der Getriebeantriebseinheit 10a gemäß der Fig. 3 dargestellt. Hier wird ein gegenüber dem Steckeranschlusselement 16 modifiziertes Steckeranschlusselement 16a verwendet, welches sich in seiner Form gegenüber dem Steckeranschlusselement 16 geringfügig unterscheidet, sodass ein seitlicher Anschluss des Gegensteckers in Richtung und Höhe des Pfeils 19 möglich wird. Jedoch wird auch bei der Getriebeantriebseinheit 10a derselbe Elektromotor 11 und dieselbe Getriebeeinheit 12 verwendet wie bei der Getriebeantriebseinheit 10.

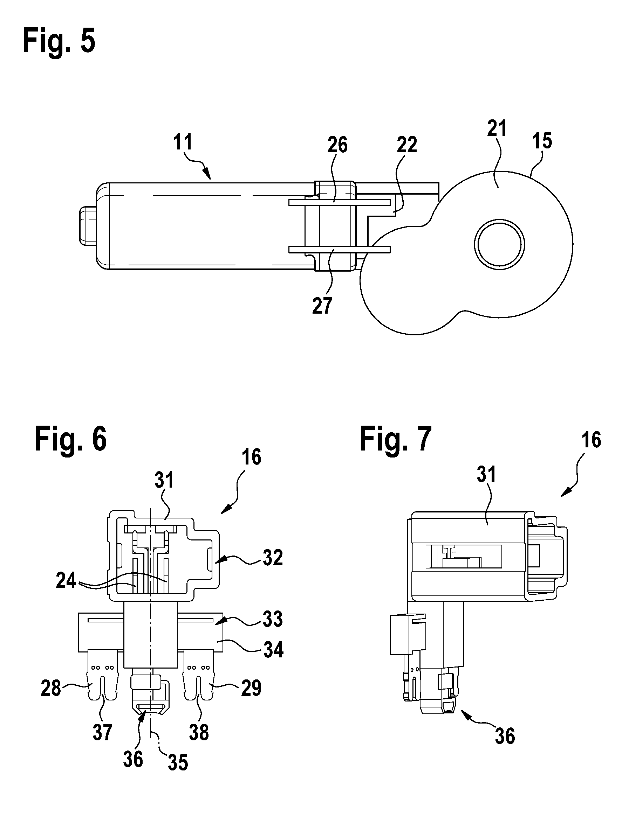

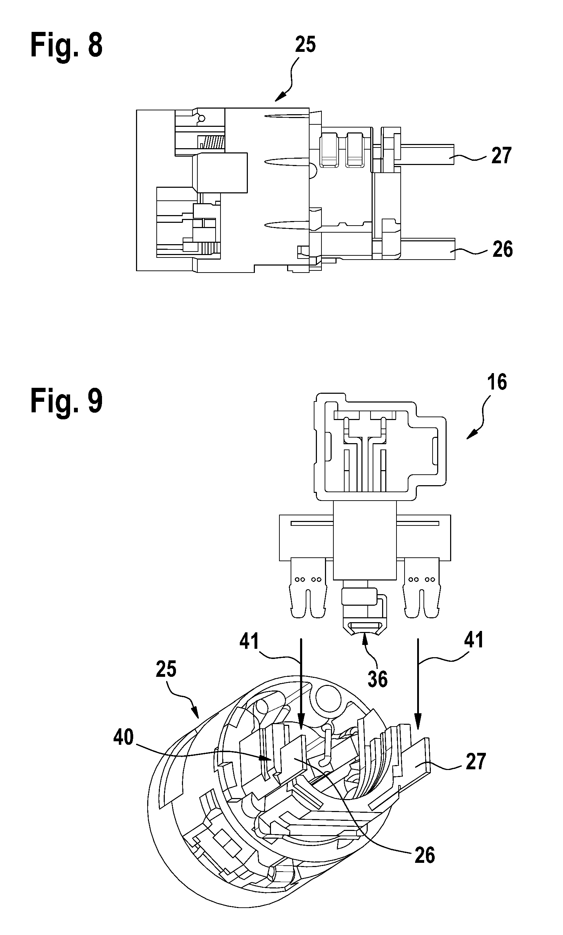

Zur Realisierung der unterschiedlichen Montagemöglichkeiten und Montagerichtungen der Steckeranschlusselemente 16, 16a an den Getriebeantriebseinheiten 10, 10a ist es vorgesehen, dass an dem Elektromotor 11 eine standardisierte Anschluss(schnitt)stelle für das Steckeranschlusselement 16, 16a ausgebildet ist. Wie man insbesondere an der Fig. 5 erkennt, weist hierzu weiterhin das Getriebegehäuse 15 in einer Ebene, die senkrecht zur Oberseite 21 des Getriebegehäuses 15 verläuft, wenigstens eine ebenfalls standardisierte Öffnung 22 auf, durch die die Steckeranschlusselemente 16, 16a mit dem Elektromotor 11 kontaktiert werden können. Diese Öffnung 22, die zur Verwirklichung zusätzlicher Positionen des Steckeranschlusselements 16, 16a in identischer Weise auch auf der Unterseite des Getriebegehäuses 15 ausgebildet sein kann, ist im Bereich einer Bürsteneinrichtung 25 des Elektromotors 11 angeordnet, welche in den Fig. 8 und 9 erkennbar ist und welche in das Getriebegehäuse 15 teilweise hineinragt. Die Bürsteneinrichtung 25 weist zwei, im Querschnitt flache bzw. rechteckförmige, Anschlusselemente 26, 27 auf, die im Bereich der Öffnung 22 des Getriebegehäuses 15 angeordnet sind. Die Anschlusselemente 26, 27 dienen der elektrischen Kontaktierung von Steckeranschlussfahnen 28, 29 des Steckeranschlusselements 16, 16a.

Das insbesondere in den Fig. 6 und 7 dargestellte Steckeranschlusselement 16 weist ein im Spritzgussverfahren hergestelltes und aus Kunststoff bestehendes Steckergehäuse 31 auf. Das Steckergehäuse 31 lässt sich in einen äußeren Bereich 32 und einen inneren Bereich 33 unterteilen, wobei der äußere Bereich 32 sich außerhalb des Getriebegehäuses 15 befindet, und der innere Bereich 33 innerhalb des Getriebegehäuses 15 angeordnet werden kann. Der äußere Bereich 32, in dem auch Anschlusspins 24 zur elektrischen Kontaktierung des Steckeranschlusselements 16 mit dem (nicht dargestellten) Gegenstecker des Kabelbaums angeordnet sind, ist in üblicher Weise dazu ausgebildet, mit dem Gegenstecker des Kabelbaums über eine Rastverbindung verbunden zu werden. Die Anschlusspins 24 sind mit den als Stanzbiegeteile aus einem flachen Materialzuschnitt ausgebildeten Steckeranschlussfahnen 28, 29 elektrisch verbunden, wobei die Ausrichtung der Anschlusspins 24 rechtwinklig zu den Steckeranschlussfahnen 28, 29 ist. Die beiden Steckeranschlussfahnen 28, 29 sind dabei an einem Querträger 34 angeordnet, der Teil des inneren Bereichs 33 ist. Hierbei befinden sich die beiden Steckeranschlussfahnen 28, 29 beidseitig einer Längsebene 35 des Steckeranschlusselements 16.

Zwischen den beiden Steckeranschlussfahnen 28, 29 ist noch beispielhaft ein Hallsensor 36 angeordnet, welcher optional vorgesehen sein kann, um die Funktionsfähigkeit des Elektromotors 11 zu überprüfen. Die beiden Steckeranschlussfahnen 28, 29 weisen jeweils eine schlitzförmige Öffnung 37, 38 auf, deren Breite bzw. Tiefe den Abmessungen der Anschlusselemente 26, 27 angepasst sind, derart, dass eine klemmende Verbindung zwischen den Anschlusselementen 26, 27 und den Steckeranschlussfahnen 28, 29 herstellbar ist.

Um eine sichere Verbindung zwischen dem Steckeranschlusselement 16, 16a und dem Elektromotor 11 zu ermöglichen, ist es vorgesehen, dass die Bürsteneinrichtung 25 sowie das Steckeranschlusselement 16, 16a mittels einer Rastverbindung 40 miteinander verbunden sind, welche durch eine entsprechende Ausbildung der Bürsteneinrichtung 25 bzw. des Steckeranschlusselements 16, 16a ermöglicht wird.

Bei der Montage der Getriebeantriebseinheit 10, 10a wird zunächst der Elektromotor 11 mit der Getriebeeinheit 12 verbunden. Anschließend wird das jeweilige Steckeranschlusselement 16, 16a mit dem Elektromotor 11 bzw. der Bürsteneinrichtung 25 in elektrische und mechanische Wirkverbindung gebracht, indem gemäß der Fig. 9 das Steckeranschlusselement 16, 16a in Richtung des Pfeils 41 mit seinen Steckeranschlussfahnen 28, 29 voraus durch die Öffnung 22 des Getriebegehäuses 15 geschoben wird. Hierbei kontaktieren die Steckeranschlussfahnen 28, 29 die Anschlusselemente 26, 27 und gehen anschließend die Rastverbindung 40 ein.

Ergänzend wird erwähnt, dass die Getriebeantriebseinheit 10, 10a in vielfältiger Art und Weise modifiziert werden kann. So ist es beispielsweise denkbar, anstelle einer Rastverbindung 40 zwischen dem Steckeranschlusselement 16, 16a und der Bürsteneinrichtung 25 beispielsweise eine Schraubverbindung zwischen dem Steckeranschlusselement 16, 16a und dem Getriebegehäuse 15 oder eine andere Verbindungsart vorzusehen.

## Patentansprüche

1. Elektrische Verbindungsanordnung, mit einem Steckeranschlusselement (16; 16a), das ein Steckergehäuse (31) sowie im Steckergehäuse (31) angeordnete Steckeranschlussfahnen (28, 29) aufweist, wobei die Steckeranschlussfahnen (28, 29) zur elektrischen Kontaktierung einer Bürsteneinrichtung (25) eines Antriebsmotors (11) dienen,
**dadurch gekennzeichnet,**
**dass** die Bürsteneinrichtung (25) elektrische Anschlusselemente (26, 27) für die Steckeranschlussfahnen (28, 29) aufweist, dass die Bürsteneinrichtung (25) mit ihren Steckeranschlussfahnen (28, 29) in ein Gehäuse (15) hineinragt, das wenigstens eine Öffnung (22) zumindest im Bereich der Steckeranschlussfahnen (28, 29) aufweist, dass das Gehäuse (15) ein mit dem Motorengehäuse (14) gekoppeltes und von diesem unterschiedliches separates Gehäuse (15) ist, durch die die Steckeranschlussfahnen (28, 29) in Kontakt mit den Anschlusselementen (26, 27) gebracht werden und, dass die Verbindung zwischen den Steckeranschlussfahnen (28, 29) und den Anschlusselementen (26, 27) als kraft-, form-, klemm- oder reibschlüssige Verbindung ausgebildet ist.

2. Verbindungsanordnung nach Anspruch 1,
**dadurch gekennzeichnet,**
**dass** die wenigstens eine Öffnung (22) an einem Getriebegehäuse (15) ausgebildet ist, das mit dem Antriebsmotor (11) verbunden ist.

3. Verbindungsanordnung nach Anspruch 1 oder 2,
**dadurch gekennzeichnet,**
**dass** die Anschlusselemente (26, 27) zumindest im Bereich der Kontaktierung mit den Steckeranschlussfahnen (28, 29) im Querschnitt rechteckförmig ausgebildet sind, wobei die Längsseite der Anschlusselemente (26, 27) parallel zur Fügerichtung (Pfeil 41) der Steckeranschlussfahnen (28, 29) verläuft und, dass die Steckeranschlussfahnen (28, 29) jeweils eine Öffnung (37, 38) zur klemmenden Aufnahme der Anschlusselemente (26, 27) aufweisen.

4. Verbindungsanordnung nach einem der Ansprüche 1 bis 3,
**dadurch gekennzeichnet,**
**dass** die Steckeranschlussfahnen (28, 29) mit Anschlusspins (24) für einen Gegenstecker verbunden sind, wobei die Anschlusspins (24) rechtwinklig zu den Steckeranschlussfahnen (28, 29) angeordnet sind.

5. Verbindungsanordnung nach einem der Ansprüche 1 bis 4,
**dadurch gekennzeichnet,**
**dass** die Steckeranschlussfahnen (28, 29) als Stanzbiegeteil aus einem flachen Materialzuschnitt ausgebildet sind.

6. Verbindungsanordnung nach einem der Ansprüche 1 bis 5,
**dadurch gekennzeichnet,**
**dass** das Steckeranschlusselement (16; 16a) zumindest Teile einer Sensoranordnung (36) trägt, die zwischen den Steckeranschlussfahnen (28, 29) angeordnet sind.

7. Verbindungsanordnung nach einem der Ansprüche 1 bis 6,
**dadurch gekennzeichnet,**
**dass** die Verbindung zwischen dem Steckeranschlusselement (16; 16a) und dem Gehäuse (15) durch eine Rastverbindung (40) erfolgt.

8. Verbindungsanordnung nach Anspruch 7,
**dadurch gekennzeichnet,**
**dass** an der Bürsteneinrichtung (25) die Rastverbindung (40) für das Steckeranschlusselement (16; 16a) ausgebildet ist.

9. Verbindungsanordnung nach einem der Ansprüche 1 bis 8,
**dadurch gekennzeichnet,**
**dass** die Steckeranschlussfahnen (28, 29) in einem Querträger (34) des Steckeranschlusselements (16; 16a) angeordnet sind, wobei die Steckeranschlussfahnen (28, 29) beabstandet zu einer Längsebene (35) des Steckeranschlusselements (16; 16a) angeordnet sind und, dass das Steckeranschlusselement (16; 16a) als ein aus Kunststoff bestehendes Spritzgussteil ausgebildet ist.

10. Verbindungsanordnung nach einem der Ansprüche 1 bis 9,
**dadurch gekennzeichnet,**
**dass** der Antriebsmotor (11) Bestandteil einer Getriebeantriebseinheit (10; 10a), insbesondere eines Fensterheberantriebs in einem Kraftfahrzeug ist.
